# EUROPÄISCHE PATENTSCHRIFT

(11) **EP 2 555 936 B1**
(45) Veröffentlichungstag und Bekanntmachung des Hinweises auf die Patenterteilung: **19.03.2014**
(21) Anmeldenummer: 11716819.5
(22) Anmeldetag: 30.03.2011
(51) Int. Cl.: B60K 5/12, B60K 17/00

(54) **FAHRZEUGKAROSSERIE MIT EINEM LÄNGSTRÄGER UND EINEM DARAN ANGEORDNETEN ELASTOMERLAGER, INSBESONDERE ALS GETRIEBELAGER**
VEHICLE BODY COMPRISING A LONGITUDINAL MEMBER AND AN ELASTOMER BEARING ARRANGED THEREON, ESPECIALLY AS A TRANSMISSION MOUNTING
CARROSSERIE DE VÉHICULE DOTÉE D'UN LONGERON ET D'UN PALIER ÉLASTOMÈRE DISPOSÉ DESSUS, SERVANT NOTAMMENT DE SUPPORT DE BOÎTE DE VITESSES

(30) Priorität: 03.04.2010 DE 102010013840
(43) Veröffentlichungstag der Anmeldung: 13.02.2013
(73) Patentinhaber: Volkswagen Aktiengesellschaft, 38440 Wolfsburg (DE)
(72) Erfinder: KRAUTH, Werner, 38442 Wolfsburg (DE); SCHIFFERLI, Gwendolin, 38459 Bahrdorf-Saalsdorf (DE)
(86) Internationale Anmeldenummer: PCT/EP2011/001596
(87) Internationale Veröffentlichungsnummer: WO 2011/120683

(56) Entgegenhaltungen:
- EP-A1- 1 834 862
- DE-A1- 3 115 394
- DE-A1- 3 507 042
- DE-A1- 10 031 165
- DE-A1- 19 909 726
- DE-A1-102006 041 094
- DE-C1- 19 703 520

## Beschreibung

Die Erfindung betrifft eine Fahrzeugkarosserie mit wenigstens einem Längsträger und einem daran angeordneten Elastomerlager zur Lagerung einer Fahrzeugkomponente nach dem Oberbegriff des Anspruchs 1, wie aus DE 35 070 42 bekannt ist.

Eine gattungsgemäße Fahrzeugkarosserie mit wenigstens einem Längsträger mit einem daran angeordneten Elastomerlager zur Lagerung einer Fahrzeugkomponente ist allgemein bekannt. Solche Elastomerlager sind regelmäßig Gummimetalllager und bestehen aus einem karosseriefest angebrachten ersten stabilen Lagerteil und einem komponentenfest verbundenen zweiten stabilen Lagerteil, wobei zwischen den Lagerteilen ein Elastomerkörper angeordnet ist. Solche Elastomerlager sind in unterschiedlichen Ausführungsformen, auch als Hydrolager, allgemein bekannt und werden je nach den aktuellen Gegebenheiten und Anforderungen ausgewählt und dimensioniert.

Dazu ist es allgemein bekannt, das Elastomerlager mit einem Lagerbock auf dem zugeordneten Längsträger beispielsweise als Getriebelager anzubringen. Ein solches Getriebelager hat üblicherweise aufgrund geometrischer und schwingungstechnischer Gegebenheiten eine relativ tiefe Lage im Vorderwagen einer Fahrzeugkarosserie. Die Profilgröße, insbesondere die Profilhöhe eines Längsträgers und damit das Längsträgerkraftniveau sind dabei durch die tiefe Lage des auf dem Längsträger angeordneten Getriebelagers begrenzt und eingeschränkt.

Weiter ist eine Lagerung eines Hinterachsdifferenzials eines Kraftfahrzeugs bekannt (DE 35 070 42 A1), welches über eine Zentralrohreinheit mit einer vorneliegenden, zweifach gelagerten Brennkraftmaschine verbunden ist. Dabei wird das mit dem Zentralrohr verbundene Hinterachsdifferenzial aufbauseitig über ein einziges, seitlich angeordnetes Lageelement abgestützt, welches in einer im Differenzialgehäuse integrierten Ausnehmung gehalten ist, so dass die Lagerung in einem geringstmöglichen Abstand zur Antriebswelle in einem torsionsarmen Bereich liegt. Zudem kann ein Längsträger das Lagerelement mit einer Ausnehmung schalenförmig umfassen, wobei eine solche Ausnehmung eine Schwächung des Längsträgers darstellen kann.

Weiter ist ein in einem Querträger integriertes Getriebelager mit in Fahrzeuglängsrichtung verlaufender Lagerachse bekannt (DE 100 31 165 C2). Im Crashfall wird das Getriebe gezielt mittels einer Crashkufe nach hinten oder oben verlagert, wobei der Kern des Getriebelagers ausreißen soll, um eine solche gezielte Verlagerung des Getriebes nicht zu behindern.

Zudem ist ein Rohbaubodenteil eines Kraftfahrzeugs bekannt (DE 199 09 726 B4), bei dem unter anderem eine Konsole integriert ist, auf die ein nach oben aufbauendes Getriebelager aufgesetzt und befestigt werden kann.

Zudem ist eine Lagervorrichtung zur Lagerung einer Fahrzeugkomponente, insbesondere eines Getriebes an einer Fahrzeugkarosserie bekannt (DE 10 2006 041 094 A1), bei der ein elastisches Lagerelement in einem Aufnahmeteil enthalten ist, welches in einer aufwändigen Anordnung mit einem Längsträger verbunden ist.

Zudem ist eine Lageranordnung insbesondere an einer Hinterachse bekannt (DE 197 03 520 C1), bei der zur Halterung des Lagers ein Schraubteil in einer wannenförmigen Aufnahme, welche einstückiger Teil der Rohbaukarosserie sein kann, verschraubt ist.

Aufgabe der Erfindung ist es, eine gattungsgemäße Fahrzeugkarosserie so weiterzubilden, dass eine Erhöhung des Längsträgerkraftniveaus bei einer tiefen Lage des Elastomerlagers möglich ist.

Diese Aufgabe wird dadurch gelöst, dass das Elastomerlager zumindest teilweise in einer Aufnahmemulde am Längsträger einliegt und das karosseriefeste erste Lagerteil die Aufnahmemulde als Crashbrücke überspannt.

Durch zumindest teilweise Einbettung des Elastomerlagers in einer Mulde am Längsträger können zur Erhöhung des Längsträgerkraftniveaus relativ große Längsträgerprofile verwendet werden, wobei die vergleichsweise tiefe Lage des Elastomerlagers am Längsträger erhalten werden kann. Eine Schwächung des Längsträgers, insbesondere im Crashfall durch die Aufnahmemulde wird dadurch vermieden, dass das karosseriefeste erste Lagerteil die Aufnahmemulde als an den Muldenrändern fixierte Crashbrücke überspannt. Im Crashfall wird somit ein im Wesentlichen längs des Längsträgers ungestört durchgehender Kraftverlauf erreicht. Das karosseriefeste erste Lagerteil wird hier somit in einer Doppelfunktion eingesetzt, einerseits als Lagerteil des Elastomerlagers und andererseits als die Aufnahmemulde überspannende und verstärkende Crashbrücke.

Die erfindungsgemäße Ausbildung einer Lagerstelle kann zur Lagerung unterschiedlicher Fahrzeugkomponenten verwendet werden. Vorzugsweise ist bei einer konkreten Ausführungsform die zu lagernde Fahrzeugkomponente ein Getriebe, wobei jeweils ein Elastomerlager als Getriebelager beiderseits des Getriebes an zwei gegenüberliegenden Längsträgern der Karosseriestruktur angebracht ist. Besonders bei solchen Getriebelagern ist eine tiefe Lage im Vorderwagen zu berücksichtigen.

In einer besonders bevorzugten Ausführungsform ist die Aufnahmemulde von oben her wannenförmig im Längsträger ausgeformt.

Das erste Lagerteil als Crashbrücke kann durch ein aufgewölbtes Profil mit gegenüberliegenden Randflanschen, in der Art eines Hut-Profils gebildet sein, wobei das Profil mit seiner Aufwölbung etwa in Fahrzeugquerrichtung ausgerichtet ist. Die Aufnahmemulde ist dabei insbesondere in Längsrichtung, entsprechend dem Kraftverlauf in einem Crashfall überdeckt und mit den gegenüberliegenden Randflanschen am Längsträger befestigt.

Das zweite Lagerteil kann dabei aus der Profilaufwölbung des ersten Lagerteils quer zum Längsträger für eine Verbindung mit der zu lagernden Fahrzeugkomponente, insbesondere mit einem Getriebe herausgeführt werden.

Dabei ist zwischen dem in der Aufnahmemulde eingebetteten Elastomerlager und dem Muldenboden ein Freiraum vorzusehen, um gegebenenfalls eine Lagerauslenkung für das zweite Lagerteil zur ermöglichen oder bei einem von unten her geschlossenen Elastomerlager einen einfachen Einbau zu gewährleisten.

Anhand einer Zeichnung wird die Erfindung näher erläutert.

Es zeigen:
- Fig. 1: einen schematischen Längsschnitt durch einen Längsträger im Bereich einer erfindungsgemäßen Getriebelageranordnung;
- Fig. 2: eine Lagerstellen entsprechend Fig. 1 nach dem Stand der Technik;
- Fig. 3: eine perspektivische Ansicht auf einen konkreten Längsträger mit einer Aufnahmemulde; und
- Fig. 4: eine Ansicht entsprechend Fig. 3 mit einem montierten Elastomerlager.

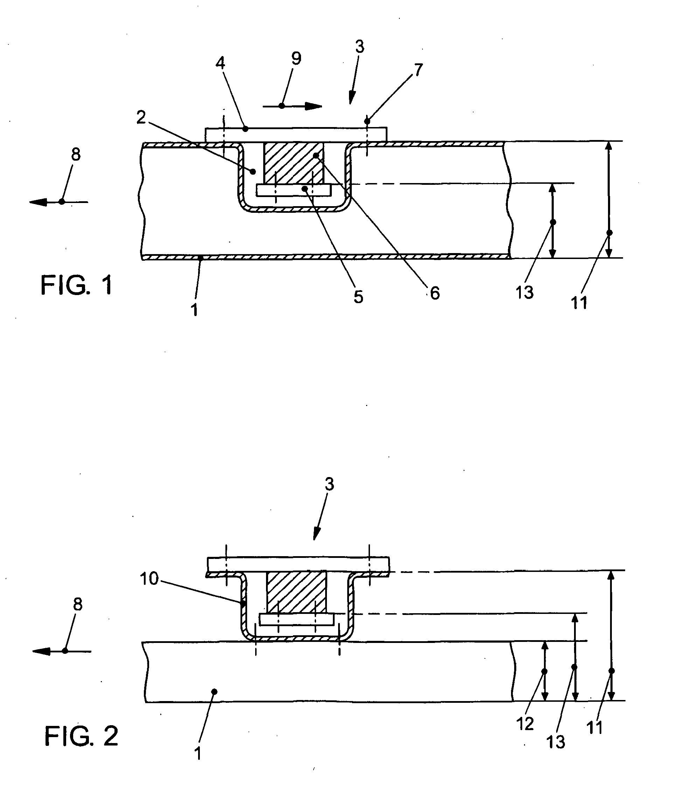

In der stark schematisierten Längsschnittdarstellung nach Fig. 1 ist ein Abschnitt eines Längsträgers 1 im Vorderwagen einer Fahrzeugkarosserie dargestellt, in dem von oben her eine wannenförmige Aufnahmemulde 2 eingeformt ist.

Für eine Getriebelagerung ist in die Aufnahmemulde 2 ein Elastomerlager als Gummi-Metall-Lager eingebettet. Das Elastomerlager besteht aus einem ersten längsträgerfest angebrachten Lagerteil 4 und einem zweiten stabilen Lagerteil 5, welches mit dem Getriebe (nicht dargestellt) verbunden ist. Zwischen den beiden Lagerteilen 4 und 5 ist ein Elastomerkörper 6 angeordnet. Zur Erläuterung der Funktion ist das Elastomerlager 3 stark vereinfacht mit einem ersten Lagerteil 4 und zweiten Lagerteil 5 als Metallplatten und einem dazwischen eingeformten Gummiblock als Elastomerkörper 6 dargestellt.

Die Metallplatte des ersten Lagerteils 4 überspannt als Crashbrücke die Aufnahmenmulde 2 und ist jeweils seitlich an den gegenüberliegenden Muldenrändern fixiert. Als Fixierungsmittel 7 können beispielsweise Schrauben oder Nieten verwendet werden. Bei einer Fahrtrichtung entsprechend Pfeil 8 erfolgt bei einem Frontcrash der Kraftverlauf entgegengesetzt entsprechend dem Pfeil 9. Ersichtlich wird im Crashfall durch das erste Lagerteil 4 als Crashbrücke ein durch die Aufnahmemulde 2 weitgehend ungestörter Kraftverlauf im Längsträger 1 geführt.

Bei der Ausführung nach Fig. 2 entsprechend dem Stand der Technik ist dagegen auf den Längsträger 1 ein Lagerbock 10 aufgesetzt, in dem das Elastomerlager 3 einliegt. Eine beispielsweise zur Verfügung stehende Bauhöhe 11 wird hier durch die relativ geringe Bauhöhe 12 des Längsträgerprofils und das aufgesetzte Elastomerlager 3 ausgenützt. Erfindungsgemäß wird gemäß Fig. 1 dieselbe zur Verfügung stehende Bauhöhe 11 zur Erhöhung des Längsträgerkraftniveaus insgesamt durch die Profilgröße des Längsträgers 1 ausgenützt. Ersichtlich liegt dabei sowohl in Fig. 1 als auch in Fig. 2 das Niveau für den Getriebeanschluss auf der gleichen Höhe 13.

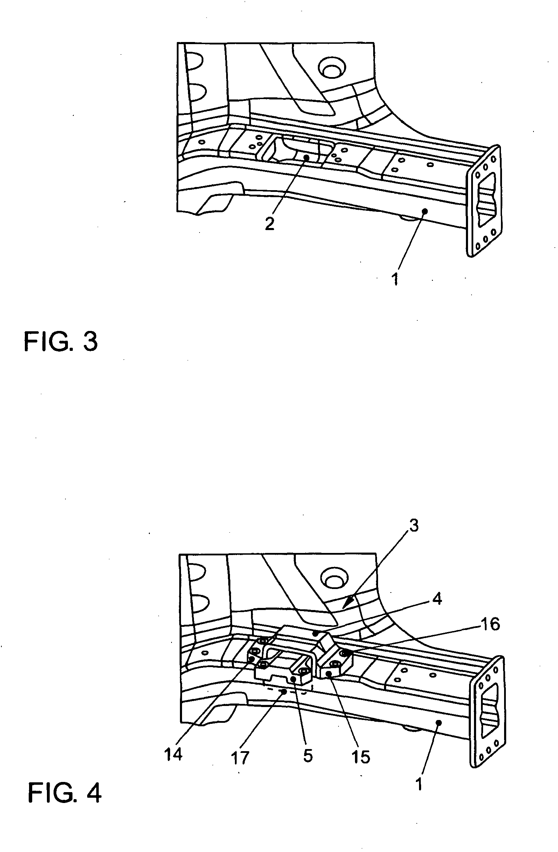

In der perspektivischen Darstellung nach Fig. 3 ist eine konkrete Ausführung eines Längsträgers 1 dargestellt, mit einer von oben her eingebrachten Aufnahmemulde 2.

In Fig. 4 ist an der Aufnahmemulde 2 ein Elastomerlager 3 als Getriebelager bereits montiert. In der konkreten Ausführungsform des Elastomerlagers 3 ist das erste Lagerteil 4 als Crashbrücke durch ein aufgewölbtes Profil mit gegenüberliegenden stabilen Randflanschen 14, 15 gebildet, die in Längsrichtung beiderseits der Aufnahmemulde 2 mittels Schrauben 16 oder gegebenenfalls Nieten mit dem Längsträger 1 verbunden sind.

Das zweite Lagerteil 5 ist hier aus der Profilaufwölbung des ersten Lagerteils 4 quer zum Längsträger 1 für eine Verbindung mit einem Getriebe herausgeführt. Wie mit der strichlierten Linie 17 eingezeichnet, können dabei gegebenenfalls weitere Elastomerlagerelemente nach unten in die Aufnahmemulde 2 einragen.

## Patentansprüche

1. Fahrzeugkarosserie mit wenigstens einem Längsträger (1) und einem daran angeordneten Elastomerlager (3) zur Lagerung einer Fahrzeugkomponente
wobei das Elastomerlager (3) aus einem karosseriefest angebrachten ersten stabilen Lagerteil (4) und einem komponentenfest verbundenen zweiten stabilen Lagerteil (5) besteht und zwischen den Lagerteilen ein Elastomerkörper (6) angeordnet ist,
**dadurch gekennzeichnet, dass** das Elastomerlager (3) zumindest teilweise in einer Aufnahmemulde (2) am Längsträger (1) einliegt und das karosseriefeste erste Lagerteil (4) die Aufnahmemulde (2) als an den Muldenrändern fixierte Crashbrücke überspannt.

2. Fahrzeugkarosserie nach Anspruch 1, **dadurch gekennzeichnet, dass** die zu lagernde Fahrzeugkomponente ein Getriebe ist und jeweils ein Elastomerlager (3) als Getriebelager beiderseits eines Getriebes an zwei gegenüberliegenden Längsträgern (1) im Vorderwagen angebracht ist.

3. Fahrzeugkarosserie nach Anspruch 1 oder 2, **dadurch gekennzeichnet, dass** die Aufnahmemulde (2) von oben her wannenförmig im Längsträger (1) ausgeformt ist.

4. Fahrzeugkarosserie nach Anspruch 3, **dadurch gekennzeichnet, dass** das erste Lagerteil (4) als Crashbrücke durch ein aufgewölbtes Profil mit gegenüberliegenden Randflanschen (14, 15) gebildet ist, wobei das Profil mit seiner Aufwölbung etwa in Fahrzeugquerrichtung ausgerichtet ist, das Profil die Aufnahmemodule (2) zumindest in Längsrichtung überdeckt und mit den gegenüberliegenden Randflanschen (14, 15) am Längsträger (1) befestigt ist.

5. Fahrzeugkarosserie nach Anspruch 4, **dadurch gekennzeichnet, dass** das zweite Lagerteil (5) aus der Profilaufwölbung des ersten Lagerteils (4) heraus quer zum Längsträger (1) für eine Verbindung mit der zu lagernden Fahrzeugkomponente, insbesondere einem Getriebe abragt.

6. Fahrzeugkarosserie nach einem der Ansprüche 1 bis 5, **dadurch gekennzeichnet, dass** zwischen dem in der Aufnahmemulde (2) eingebetteten Elastomerlager (3) und dem Muldenboden ein Freiraum vorgesehen ist.

## Claims

1. Vehicle body having at least one longitudinal carrier (1) and an elastomeric bearing (3) which is arranged thereon for mounting a vehicle component, the elastomeric bearing (3) comprising a first stable bearing part (4) which is attached in a fixed manner to the body and a second stable bearing part (5) which is connected in a fixed manner to the component, and an elastomer body (6) being arranged between the bearing parts, **characterized in that** the elastomeric bearing (3) lies at least partially in a receiving recess (2) on the longitudinal carrier (1) and the first bearing part (4) which is fixed to the body spans the receiving recess (2) as a crash bridge which is fixed at the recess edges.

2. Vehicle body according to Claim 1, **characterized in that** the vehicle component which is to be mounted is a transmission, and in each case one elastomeric bearing (3) is attached as transmission mount on both sides of a transmission on two longitudinal carriers (1) which lie opposite one another in the front part of the vehicle.

3. Vehicle body according to Claim 1 or 2, **characterized in that** the receiving recess (2) is shaped out from the top in a trough-like manner in the longitudinal carrier (1).

4. Vehicle body according to Claim 3, **characterized in that** the first bearing part (4) is formed as a crash bridge by way of an arched profile with edge flanges (14, 15) which lie opposite one another, the profile being oriented with its arch approximately in the vehicle transverse direction, the profile covering the receiving recess (2) at least in the longitudinal direction and being fastened to the longitudinal carrier (1) by way of the edge flanges (14, 15) which lie opposite one another.

5. Vehicle body according to Claim 4, **characterized in that** the second bearing part (5) protrudes out of the profile arch of the first bearing part (4) transversely with respect to the longitudinal carrier (1) for a connection to the vehicle component which is to be mounted, in particular a transmission.

6. Vehicle body according to one of Claims 1 to 5, **characterized in that** a clearance is provided between the elastomeric bearing (3) which is embedded in the receiving recess (2) and the recess bottom.

## Revendications

1. Carrosserie de véhicule comprenant au moins un longeron (1) et un palier élastomère (3) disposé sur celui-ci pour le support sur palier d'un composant de véhicule,
le palier élastomère (3) étant constitué d'une première partie de palier stable (4) montée de manière fixe sur la carrosserie et d'une deuxième partie de palier stable (5) reliée de manière fixe au composant, et un corps élastomère (6) étant disposé entre les parties de palier,
**caractérisée en ce que** le palier élastomère (3) est logé au moins partiellement dans une cavité de réception (2) sur le longeron (1) et la première partie de palier (4) fixée à la carrosserie enjambe la cavité de réception (2) en tant que pont d'impact fixé aux bords de la cavité.

2. Carrosserie de véhicule selon la revendication 1, **caractérisée en ce que** le composant de véhicule devant être supporté sur palier est une boîte de vitesses, et un palier élastomère (3) respectif est monté, en tant que palier de boîte de vitesses, de part et d'autre d'une boîte de vitesses sur deux longerons (1) opposés dans la partie avant.

3. Carrosserie de véhicule selon la revendication 1 ou 2, **caractérisée en ce que** la cavité de réception (2) est formée depuis le haut en forme de bac dans le longeron (1).

4. Carrosserie de véhicule selon la revendication 3, **caractérisée en ce que** la première partie de palier (4) est formée en tant que pont d'impact par un profilé bombé pourvu de brides de bord opposées (14, 15), le profilé étant orienté de manière à ce que son bombement soit approximativement dans la direction transversale du véhicule, le profilé recouvrant la cavité de réception (2) au moins dans la direction longitudinale et étant fixé au longeron (1) à l'aide des brides de bord opposées (14, 15).

5. Carrosserie de véhicule selon la revendication 4, **caractérisée en ce que** la deuxième partie de palier (5) fait saillie hors du bombement de profilé de la première partie de palier (4), de manière transversale au longeron (1), en vue d'une liaison avec le composant de véhicule devant être supporté sur palier, en particulier avec une boîte de vitesses.

6. Carrosserie de véhicule selon l'une quelconque des revendications 1 à 5, **caractérisée en ce qu'**il est prévu un espace libre entre le palier élastomère (3) encastré dans la cavité de réception (2) et le fond de la cavité.
